# EUROPÄISCHE PATENTSCHRIFT

(11) **EP 0 381 992 B1**
(45) Veröffentlichungstag und Bekanntmachung des Hinweises auf die Patenterteilung: **24.11.1993**
(21) Anmeldenummer: 90101352.4
(22) Anmeldetag: 24.01.1990
(51) Int. Cl.: B65D 5/72

(54) **Faltschachtelzuschnitt und Schachtel hieraus**
Blank for a folding box, and box made therefrom
Flan découpé pour boîte et boîte obtenue

(30) Priorität: 03.02.1989 DE 3903179
(43) Veröffentlichungstag der Anmeldung: 16.08.1990
(73) Patentinhaber: WILHM. JÖNTZEN GMBH, D-28717 Bremen (DE)
(72) Erfinder: Reinecke, Peter, D-2800 Bremen 33 (DE); Schmidt, Jürgen, D-2800 Bremen 61 (DE)
(74) Vertreter: KOHLER SCHMID + PARTNER

(56) Entgegenhaltungen:
- DE-U- 8 903 012
- US-A- 3 096 011
- US-A- 3 344 972
- US-A- 3 734 361

## Beschreibung

Die Erfindung betrifft eine Faltschachtel mit einer Ausgießöffnung in einem Seitenteil einer beim Falten zunächst entstehenden Hülse und einer an einem Seitenteil ohne Ausgießöffnung angelenkten Sicherungslasche, die beim Verschließen der Schachtel in den die Ausgießöffnung aufweisenden Bereich des Seitenteils zu liegen kommt, wobei die Ausgießöffnung mit einem Wiederverschluß versehen ist, und die Sicherungslasche mindestens teilweise über dem Wiederverschluß liegt.

Zwar sind Faltschachteln mit einer schon am Zuschnitt vorgesehenen Sicherung des Originalverschlusses bekannt, jedoch weisen diese keine Ausgießöffnung auf. So ist z.B. mit der DE 28 04 812 A1 ein Faltschachtelzuschnitt und eine Faltschachtel bekannt, bei der die spätere Ausgießöffnung im Faltschachtelzuschnitt nur durch eine Perforation angedeutet ist. Dieser perforierte Teil wird mit einer Lasche verklebt. Soll die Schachtel geöffnet werden, so muß über die Lasche, die von der Schachtel abgerissen werden muß, die Ausgießöffnung durch Ausreißen des perforierten Teils erst hergestellt werden. Zwar ist eine Manipulation an der Ausgießöffnung der Schachtel sofort erkennbar, aber ein Wiederverschließen der Schachtel ist nicht mehr möglich.

Aus der US-PS 3,344,972 ist eine Faltschachtel mit einer wiederverschließbaren, an einem schmalen Seitenteil angebrachten Ausgießöffnung bekannt, die mit einer aufgeklebten Sicherungslasche gegen unbeabsichtigtes bzw. vorzeitiges Öffnen gesichert ist. Die Sicherungslasche ist über eine kreissegmentförmig angeordnete Perforation mit dem Deckel der Faltschachtel verbunden und kann durch Abtrennen der Sicherungslasche an der Perforation und durch Überwinden der Klebeverbindung am schmalen Seitenteil der Faltschachtel abgetrennt werden. Dabei entsteht jedoch das Problem, daß beim Abtrennen der Sicherungslasche gleichfalls Teile des schmalen Seitenteils und/oder Teile der ebenfalls aus Papier hergestellten Ausgießöffnung in Mitleidenschaft gezogen werden. Außerdem bietet die Sicherungslasche nur einen schlechten bzw. gar keinen Ansatzpunkt, um die Sicherungslasche von der Faltschachtel zu lösen.

Davon ausgehend liegt der Erfindung die Aufgabe zugrunde, eine wiederverschließbare Faltschachtel der eingangs genannten Art derart weiterzubilden, daß nicht nur ein vorzeitiges oder unbeabsichtigtes Öffnen verhindert wird, bzw. eine Manipulation im Bereich der Ausgießöffnung sichtbar gemacht wird, sondern auch gleichzeitig ein bestimmungsgemäßes Öffnen der Faltschachtel in einfacher Weise möglich wird.

Als technische Lösung dieser Aufgabe wird vorgeschlagen, daß die Sicherungslasche am Karton des Seitenteiles nur in der Umgebung der Ausgießöffnung aufgeklebt und daß außerhalb des Klebebereiches in die Sicherungslasche eine Aussparung ausgestanzt ist.

Eine nach dieser technischen Lehre ausgebildete Faltschachtel hat den Vorteil, daß ein zerstörungsfreies Öffnen der Ausgießöffnung nicht möglich ist und daß die Ausgießöffnung dennoch leicht vom Bediener geöffnet werden kann. Die über die Ausgießöffnung angeordnete, um die Ausgießöffnung herum verklebte Seitenlasche verhindert ein Ausklappen des Wiederverschlusses der Ausgießöffnung. Somit muß vor dem Ausgießen des Inhaltes der Faltschachtel die Seitenlasche entfernt werden. Durch die Klebeverbindung der Seitenlasche auf der Faltschachtel kann, nachdem die Seitenlasche einmal entfernt wurde, diese nicht wieder in den Originalzustand zurückgebracht werden. Dadurch ist es jederzeit möglich, festzustellen, ob die Faltschachtel vor dem käuflichen Erwerb bereits geöffnet gewesen ist.

Darüberhinaus gewährleistet die in der Sicherungslasche vorgesehen Aussparung ein problemloses Entfernen zumindest eines Teils der Seitenlasche von der Faltschachtel. Hierbei wird entweder mit einem spitzen, flachen Gegenstand, z. B. einem Messer, einem Fingernagel, einer Schere usw., in die Aussparung hineingegriffen und die Aussparung dabei derart vergrößert, daß entweder ein Teil der Seitenlasche entfernt wird oder aber die Aussparung groß genug gemacht wird, um den Wiederverschluß der Ausgießöffnung herauszuklappen. Unterstützt wird dieser Vorgang durch den Umstand, daß die Seitenlasche nicht auf der Ausgießöffnung, sondern neben der Ausgießöffnung auf der Faltschachtel verklebt ist.

Ein besonderer Vorteil der Erfindung liegt darin, daß die Schachtel über die Sicherungslasche sicher verschlossen ist. Ein Ausgießen ist nur möglich, wenn die Sicherungslasche, die die Ausgießöffnung zumindest teilweise übergreift, entfernt wird. Da die Sicherungslasche nicht direkt über der Öffnung selbst sondern über dem Wiederverschluß der Schachtel liegt, kann nach dem Entfernen der Lasche die Schachtel wieder verschlossen werden. Die Lasche selbst dient nicht als Wiederverschluß, sie dient lediglich als Kennzeichen dafür, ob die Schachtel noch original verschlossen ist oder nicht.

Die Sicherungslasche muß also die Ausgießöffnung nicht vollständig überdecken, es genügt, wenn sie teilweise von der Lasche übergriffen wird, und zwar deshalb, weil die Sicherungslasche nicht die Aufgabe hat, die Öffnung zu verschließen, sondern ein Öffnen des Wiederverschlusses, welcher die Ausgießöffnung verschließt, zu verhindern. Dabei ist die Sicherungslasche am Seitenteil und nicht am Wiederverschluß anzukleben.

Die Erfindung bezieht sich weiter auf eine Faltschachtel aus einem im Vorhergehenden beschriebenen Zuschnitt. Die auf eine solche Faltschachtel angewandte Erfindung besteht darin, daß die Sicherungslasche mindestens teilweise die Ausgießöffnung verschließt und im Bereich der Ausgießöffnung an dem Seitenteil angeklebt ist. Dies kann so geschehen, daß die aus Karton bestehende Sicherungslasche auf den Karton des Seitenteiles aufgeklebt ist und daher außerordentlich fest haftet. Beim Ablösen der Sicherungslasche wird das Aussehen der Faltschachtel im Bereich der Ausgießöffnung so nachhaltig gestört, daß es sofort auffällt, wenn die Ausgießöffnung unbefugt geöffnet worden ist.

Dabei kann wiederum die Sicherungslasche die Ausgießöffnung oder deren Blechverstärkung ganz oder nur teilweise überdekken. Auch kann die Sicherungslasche eine nicht angeklebte Handhabe aufweisen, um das Abreißen der Sicherungslasche von der Ausgießöffnung zu erleichtern. Hierzu kann die Sicherungslasche auch eine kleine Aussparung aufweisen, in die beispielsweise mit dem Fingernagel oder einem Messer eingegriffen werden kann und die in einem Bereich der Sicherungslasche vorgesehen ist, der nicht an dem Seitenteil angeklebt ist. Auch kann die Sicherungslasche seitlich über die Blechverstärkung hinaus treten und dort nicht verklebt sein, so daß die seitlich über die Blechverstärkung hinaus tretenden Ränder der Sicherungslasche als Handhabe zum Abreißen der Sicherungslasche von der Ausgießöffnung dienen können.

Die Erfindung eignet sich insbesondere zur Anwendung bei Faltschachteln, bei denen die Ausgießöffnung eine zusätzlich eingesetzte Blechverstärkung aufweist, die auch als Wiederverschluß Anwendung finden kann. Dabei bilden die seitlichen Teile der Blechverstärkung eine seitliche Begrenzung der Schütte. Die seitlichen Teile der Blechverstärkung können innerhalb der Schachtel einen Anschlag aufweisen, der den Ausstellwinkel der Schütte begrenzt. Außerdem erlaubt die bekannte Blechverstärkung ein leichtes Wiederverschließen der Ausgießöffnung.

Bei einer Ausführungsform der Erfindung kann die Sicherungslasche über eine Deckellasche an einem Seitenteil angelenkt sein, das demjenigen Seitenteil benachbart ist, in dem die Ausgießöffnung vorgesehen ist. In diesem Falle ist die an diesem Seitenteil angelenkte Deckellasche durch die über eine Faltlinie verbundene Sicherungslasche verlängert, die dann vom Deckel her nach unten geklappt die Ausgießöffnung verschließt. Diese Ausführungsform hat den Vorteil, daß sich die Sicherungslaschen ohne großen Aufwand an dem Zuschnitt vorsehen lassen.

Besonders materialsparend ist eine Ausführungsform der Erfindung, bei der die Sicherungslasche aus einem Teil einer an einem Seitenteil angelenkten Deckellasche ausgeschnitten ist. Die betreffende Deckellasche bleibt dabei zu einem Teil erhalten. Bei anderen Ausführungsformen der Erfindung bleibt die bei bekannten Faltschachteln an das die Ausgießöffnung enthaltende seitenteil angelenkte Deckellasche erhalten, die Sicherungslasche ist an die Deckellasche des benachbarten Seitenteiles angelenkt und wird beim Schließen der Schachtel über die Ausgießöffnung gefaltet.

Unabhängig davon, ob die Ausgießöffnung in einem schmalen Seitenteil oder in einem breiten Seitenteil vorgesehen ist, ist auch die Sicherungslasche aus der an diesem angelenkten Deckellasche ausgeschnitten. Diese Ausführungsform der Erfindung kann dahin gehend weiter ausgebildet sein, daß der nach dem Schnitt an dem die Ausgießöffnung aufweisenden Seitenteil verbleibende Teil der Deckellasche einen Rand aufweist, der die Verlängerung der Faltlinie zwischen dem Seitenteil mit Ausgießöffnung und dem Seitenteil bildet, das dem Seitenteil gegenüberliegt, an dessen Deckellasche die ausgeschnittene Sicherungslasche angelenkt ist. Diese Ausführungsform hat den Vorteil, daß dieser Rand des verbleibenden Teiles der Lasche sich beim Schließen der Schachtel an die Innenfläche des benachbarten Seitenteiles im Bereich der Faltlinie anlenkt, die die Deckellasche mit dem betreffenden Seitenteil verbindet. Dadurch wird, wie bei den bekannten Faltschachteln, diese Kante verstärkt. Der stehengebliebene Teil der Lasche erfüllt den Zweck, den Deckel abzudichten, dem auch die bekannten Staublaschen dienen. Diese Wirkung ist auf der gegenüberliegenden Seite nicht notwendig, weil dort an die Deckellasche die Sicherungslasche angelenkt ist, die beim Schließen der Schachtel um den oberen Rand des die Ausgießöffnung enthaltenden Seitenteiles nach unten geklappt wird, so daß mindestens so weit, wie die Faltlinie zwischen der Sicherungslasche und der Deckellasche entlang des oberen Randes des die Ausgießöffnung enthaltenden Seitenteiles sich erstreckt, durch diese Abkantung ebenfalls ein absolut dichter Verschluß gewährleistet ist. Diese Ausführungsform der Erfindung ist daher besonders vorteilhaft und trotzdem sehr einfach herzustellen, es bedarf nur einer Schnittlinie durch eine Lasche, die hierdurch in eine Deckel- oder Staublasche und eine Sicherungslasche geteilt wird.

Bei Ausführungsformen der Erfindung kann die Sicherungslasche eine sich verjüngende Form aufweisen, wobei das freie Ende der Zunge einen Abstand von dem seitlichen Rand der Deckel- oder Staublasche aufweisen kann. In diesem Fall ist daher die zungenartige Sicherungslasche kürzer als die Breite des benachbarten Seitenteiles mit der Ausgießöffnung. Dies ermöglicht, daß der stehengebliebene Teil der Deckellasche seine ursprüngliche Länge beibehält, beispielsweise bis in den mittleren Bereich des Deckels der Faltschachtel reicht. Beispielsweise kann die Länge der Sicherungslasche etwa zwei Drittel der Breite des die Ausgießöffnung aufweisenden Seitenteiles aufweisen. Bei anderen Ausführungsformen der Erfindung erstreckt sich die Sicherungslasche im Faltschachtelzuschnitt über die gesamte Breite des die Ausgießöffnung aufweisenden Seitenteiles. Die an diesem Seitenteil angelenkte Deckel- oder Staublasche ist dann nur so lang, wie es die Verjüngung der Sicherungslasche zuläßt.

Die Länge der Sicherungslasche ist bei den Ausführungsformen, bei denen die Sicherungslasche an dem Seitenteil bzw. dessen Deckellasche angelenkt ist, das dem die Ausgießöffnung aufweisenden Seitenteil benachbart ist, durch die Breite des letztgenannten Seitenteiles begrenzt. Da die Sicherungslasche bei der fertig gefalteten Schachtel über die Ausgießöffnung zu liegen kommen soll, ist damit auch der Abstand begrenzt, den die Ausgießöffnung von dem oberen Rand der Schachtel aufweist. Denn die Sicherungslasche soll ja die Ausgießöffnung zumindest zu einem Teil verdecken, so daß sie abgerissen werden muß, wenn die Ausgießöffnung geöffnet wird. Ist die Sicherungslasche jedoch, wie bei der eingangs erwähnten Ausführungsform beschrieben, an demjenigen Seitenteil bzw. dessen Deckellasche angelenkt, das bei der fertig gefalteten Schachtel dem Seitenteil gegenüberliegt, das die Ausgießöffnung aufweist, so kann die Sicherungslasche in angemessenen Grenzen beliebig lang sein und damit auch der Abstand der Ausgießöffnung von dem Deckel größer sein als bei Ausführungsformen, bei denen die Sicherungslasche an dem Seitenteil angelenkt ist, das dem die Ausgießöffnung aufweisenden Seitenteil benachbart ist.

Ein leichtes Entfernen der Sicherungslasche kann auch dadurch bewirkt werden, daß sie eine an ihrem seitlichen Rand überstehende Handhabe, z.B. eine Nase o. dgl. aufweist. Die Sicherungslasche kann an dieser Nase leicht ergriffen und von der Schachtel abgerissen werden, so daß der Wiederverschluß zugänglich wird und über diesen die Ausgießöffnung geöffnet werden kann.

Vorteilhaft kann auch der am Seitenteil angeklebte Teil der Sicherungslasche vom nicht angeklebten Teil über eine Perforation verbunden sein. Es wird dann beim Entfernen der Sicherungslasche nur der nicht angeklebte Teil abgerissen, wobei die Sicherungslasche entlang der Perforation einreißt, und der angeklebte Teil an der Schachtel verbleibt . Hierdurch wird eine eventuelle Beschädigung empfindlicher Wiederverschlüsse verhindert.

Weitere Merkmale der Erfindung ergeben sich aus der folgenden Beschreibung einer Ausführungsform der Erfindung in Verbindung mit den Ansprüchen und der Zeichnung. Die einzelnen Merkmale können je für sich oder zu mehreren bei Ausführungsformen der Erfindung verwirklicht sein.

In der Zeichnung sind Ausführungsformen der Erfindung dargestellt. Es zeigen:
- Fig. 1: einen ersten Faltschachtelzuschnitt;
- Figuren 2 bis 6: die Faltvorgänge beim Schließen der Faltschachtel; und
- Fig. 7: einen weiteren Faltschachtelzuschnitt.

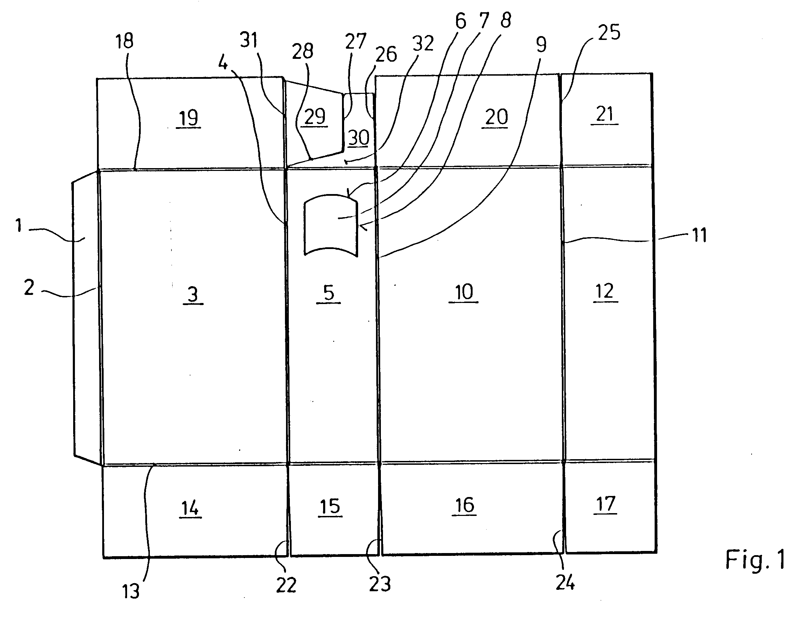

Bei der in der Figur 1 dargestellten Ausführungsform der Erfindung weist der Zuschnitt aus Karton eine Klebelasche 1 auf, die über eine Faltlinie 2 mit einem breiten Seitenteil 3 verbunden ist, das wiederum über eine Faltlinie 4 mit einem schmalen Seitentteil 5 verbunden ist. Dieses weist eine Ausgießöffnung 6 auf, die durch eine im Seitenteil 5 ausgestanzte Lasche gebildet ist, die wiederum durch eine an dieser Lasche befestigte Blechverstärkung 7 verstärkt ist. Die Blechverstärkung 7 weist rechtwinklig abgebogene Schenkel 8 auf, die durch die Wand des Seitenteiles 5 an den seitlichen Rändern der Lasche hindurchtreten und die seitliche Begrenzung der Ausgießöffnung 6 bilden. Diese Schenkel weisen an ihren inneren Enden Anschläge auf, die das Herausklappen der Blechverstärkung 7 in einem bestimmten Ausstellwinkel begrenzen. Die Blechverstärkung 7 dient als Wiederverschluß 34 für die Ausgießöffnung 6 der Schachtel.

Durch Herausklappen der Blechverstärkung 7 wird die Schachtel geöffnet und durch das Einklappen wieder verschlossen.

Das Seitenteil 5 ist über eine Faltlinie 9 mit einem breiten Seitenteil 10 und dieses wiederum über eine Faltlinie 11 mit einem schmalen Seitenteil 12 verbunden, an dem die Klebelasche 1 beim Zusammenfalten der Faltschachtel angeklebt wird, so daß die Hülsenform der Schachtel entsteht.

Durch eine Faltlinie 13 sind eine breite Bodenlasche 14 mit dem Seitenteil 3, eine schmale Bodenlasche oder Staublasche 15 mit dem schmalen Seitenteil 5, eine breite Bodenlasche 16 mit dem breiten Seitenteil 10 und eine schmale Bodenlasche oder Staublasche 17 mit dem schmalen Seitenteil 12 verbunden.

Durch eine Faltlinie 18 sind eine Deckellasche 19 an dem breiten Seitenteil 3, eine Deckellasche 20 an dem breiten Seitenteil 10 und eine Deckel- oder Staublasche 21 an dem schmalen Seitenteil 12 angelenkt.

Die Bodenlaschen 14 und 15 sind durch eine Schnittlinie 22, die Bodenlaschen 15 und 16 durch eine Schnittlinie 23 und die Bodenlaschen 16 und 17 durch eine Schnittlinie 24 von einander getrennt. Zwischen den Deckellaschen 20 und 21 befindet sich eine Schnittlinie 25 und an dem in Fig. 1 linken seitlichen Rand der Deckellasche 20 eine Schnittlinie 26. Durch die Faltlinie 18 ist bei bekannten Zuschnitten an dem schmalen Seitenteil 5 eine Staublasche angelenkt, die in der Form der Staublasche 21 entspricht. Bei der dargestellten Ausführungsform der Erfindung ist die an das Seitenteil 5 angelenkte Staublasche jedoch durch eine Schnittlinie 27, 28 in zwei Teile, nämlich eine Sicherungslasche 29 und einen restlichen Teil 30 aufgeteilt, der zumindest teilweise die Funktion einer Staublasche übernimmt. Die Sicherungslasche 29 ist über eine Faltlinie 31, die die Verlängerung der Faltlinie 4 bildet, an den seitlichen Rand der Deckellasche 19 angelenkt. Die Sicherungslasche 29 weist eine sich verjüngende Form auf und der Abschnitt 28 der Schnittlinie verläuft in einem spitzen Winkel zu der Faltlinie 18, wogegen der sich an den Abschnitt 28 der Schnittlinie anschließende Abschnitt 27 der Schnittlinie rechtwinklig zu der Faltlinie 28 verläuft. Die Länge der Sicherungslasche 29, also der Abstand des Schnittlinienabschnittes 27 von der Faltlinie 31, beträgt etwa zwei Drittel der Breite des Seitenteiles 5, so daß der durch die Schnittlinie 27, 28 abgeteilte Rest der Staublasche einen leistenförmigen, durch die einander parallelen Schnittlinien 26 und 27 begrenzten Abschnitt 30 und einen damit einstückigen Abschnitt 32 aufweist, der über die Faltlinie 18 mit dem Seitenteil 5 verbunden ist und sich entlang dieser Faltlinie 18 über die ganze Breite des Seitenteiles 5 erstreckt, dessen Höhe jedoch im Bereich des Schnittpunktes der Faltlinien 18 und 4 Null ist und bis zum Knickpunkt der Schnittlinie 27, 28 entsprechend der Verjüngung der Sicherungslasche 29 zunimmt.

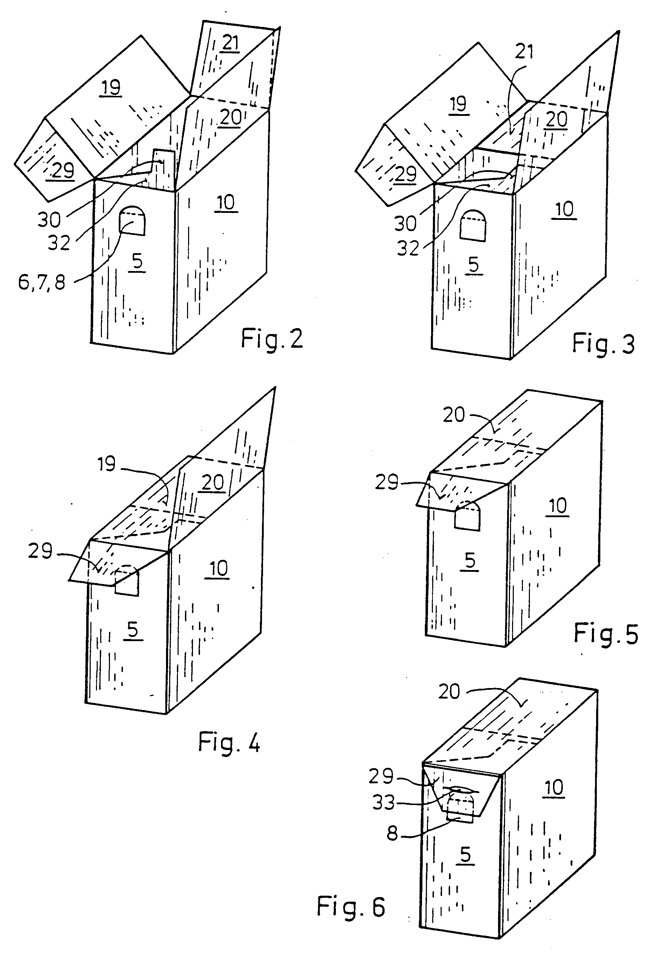

Den Faltvorgang zeigen die Figuren 2 bis 6. Nachdem durch Ankleben der Klebelasche 1 an das Seitenteil 12 die übliche Hülse entstanden ist, wird der Boden der Faltschachtel durch Einklappen der Staublaschen 15 und 17 und Darüberklappen der Bodenlaschen 14 und 16 und Verkleben dieser Laschen hergestellt. Nach dem Füllen der Schachtel wird zunächst der stehengebliebene Teil 30, 32 der an das Seitenteil 5 angelenkten Lasche nach innen geschlagen (Fig. 2), worauf die gegenüberliegende Staublasche 21 ebenfalls eingeschlagen wird (Fig. 3). Diese beiden Faltvorgänge können auch in umgekehrter Reihenfolge vorgenommen werden. Hierauf werden die Deckellaschen 20 und 19 eingeschlagen und miteinander verklebt, wobei es wiederum gleichgültig ist, welche der beiden Laschen zuerst eingeschlagen wird (Fig. 3 und 4). Nun steht die Sicherungslasche 29 seitlich von dem Schachtelkörper ab (Fig. 5).

Bei einer Ausführungsform der Erfindung wird nunmehr die Sicherungslasche 29 über die Blechverstärkung 7 an die Wand des Seitenteiles 5 abgeklappt und verklebt. Dabei befindet sich der Klebestreifen der Sicherungslasche 29 nicht auf der Blechverstärkung 7, sondern ist seitlich dazu versetzt, so daß die Sicherungslasche 29 mit dem Seitenteil 5 verklebt ist. Die Sicherungslasche 29 verklebt nun die Ausgießöffnung 6, die nicht geöffnet werden kann, ohne die Sicherungslasche 29 zu entfernen. Hierfür können seitlich über den Rand der Blechverstärkung 7 hinausragende Abschnitte der Sicherungslasche 29 als Handhabe dienen, die nicht mit Klebstoff angelegt sind. Auch kann in die Sicherungslasche 29 eine Aussparung 33 ausgestanzt sein in einem Bereich, in dem die Sicherungslasche 29 nicht an die Wand des Seitenteiles 5 angeklebt ist.

Die Unterteilung einer Deckellasche in die restliche Deckellasche und die Sicherungslasche durch einen Schnitt gewährleistet eine besonders einfache und materialsparende Herstellung der erfindungsgemäßen Faltschachtel.

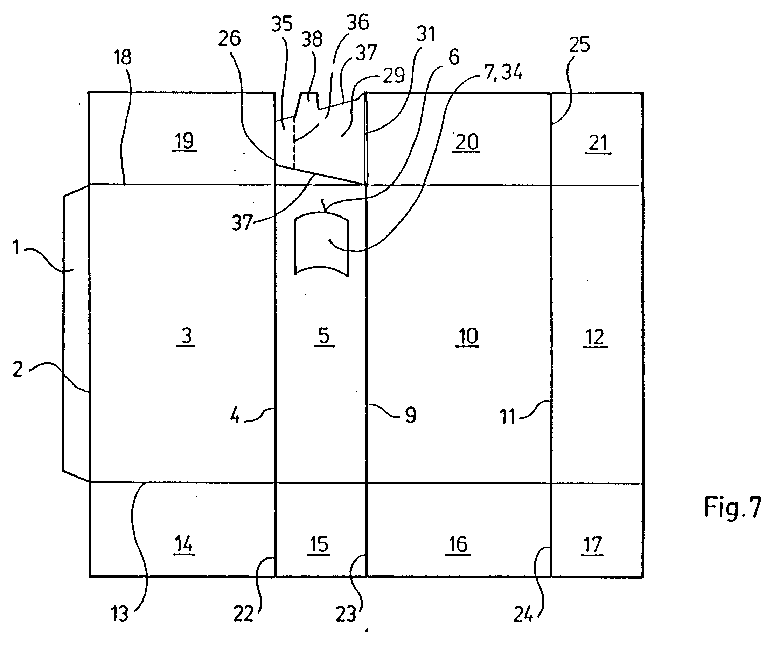

Die Fig. 7 zeigt eine weitere Ausführungsform eines Faltschachtelzuschnitts, der im wesentlichen wie der der Fig. 1 aufgebaut ist. Bei diesem Faltschachtelzuschnitt ist die Sicherungslasche 29 über die Faltlinie 31 mit der Deckellasche 20 verbunden.

Die Sicherungslasche 29 weist ebenfalls eine sich verjüngende Form auf, wobei das breitere Ende an der Deckellasche 20 angelenkt ist. Die Länge dieser Sicherungslasche 29 entspricht der Breite des Seitenteils 5, so daß das schmälere Ende direkt an die Deckellasche 19 anschließt und von dieser lediglich durch die Schnittlinie 26 getrennt ist. An diesem schmäleren Ende ist ein Abschnitt 35 über eine Perforierung 36 vom Rest der Sicherungslasche 29 abgeteilt. Ferner weist einer der seitlichen Ränder 37 eine Handhabe 38 in Form einer Nase auf, über die die Sicherungslasche 29 bei gefalteter Schachtel ergriffen werden kann.

Die Lage der Blechverstärkung 7 im Seitenteil 5, wobei die Blechverstärkung 7 den Wiederverschluß 34 darstellt, kann derart gewählt sein, daß bei zusammengefalteter Schachtel der Abschnitt 35 auf der Blechverstärkung 7 zu liegen kommt. Bei einer anderen Ausführungsform kann die Lage der Blechverstärkkung 7 auch so gewählt sein, daß diese bei zusammengefalteter Schachtel zwischen dem Abschnitt 35 und der Faltlinie 31 liegt, also der Abschnitt 35 unterhalb des Wiederverschlusses angeordnet ist. Bei der ersten Ausführungsform kann z.B. der Abschnitt 35 mit der Blechverstärkung 7 verklebt sein, wobei bei der zweiten Ausführungsform die Blechverstärkung 7 frei von Klebstoff ist, da der Abschnitt 35 mit dem Seitenteil 5 verklebt ist.

Wird nun die Sicherungslasche 29 an der Handhabe 38 ergriffen und vom Seitenteil 5 abgerissen, so verbleibt im ersten Falle der Abschnitt 35 auf der Blechverstärkung 7, wohingegen im zweiten Ausführungsbeispiel die Blechverstärkung 7 völlig frei von Resten der Sicherungslasche 29 ist, da der Abschnitt 35 unterhalb des Wiederverschlusses 34 verbleibt.

Diese Ausführungsform der Sicherungslasche 29 hat den Vorteil, daß insbesondere empfindliche Wiederverschlüsse 34 nicht beschädigt werden, da der aufgeklebte Abschnitt 35 nicht abgerissen wird bzw. der Wiederverschluß 34 gar nicht erst mit der Sicherungslasche 29 verklebt wird.

Bei einer speziellen Ausführungsform kann die Länge der Sicherungslasche 29 auch größer als die Breite des Seitenteils 5 sein, wobei nun die Sicherungslasche 29 mit ihrem Abschnitt die Verlängerung der Faltlinie 4 überragt, so daß die Schnittlinie 26 nicht mehr mit der Faltlinie 4 fluchtet. Die Schnittlinie 26 ist bei dieser Ausführungsform um den Betrag versetzt, der der Differenz der Länge der Sicherungslasche 29 und der Breite des Seitenteils 5 entspricht. Die Deckellasche 19 ist dabei um diesen Betrag verschmälert. Vorteilhaft erstreckt sich dabei die neue Schnittlinie 26 vom freien Ende der Deckellasche 19 nicht unmittelbar bis zur Faltlinie 18, sondern verläuft entlang der Kontur des in die Umfangslinie der Deckellasche 19 eingreifenden Abschnitts 35, so daß die neue Schnittlinie sich über wenigstens einen Knickpunkt bis zur Faltlinie 18 erstreckt.

## Patentansprüche

1. Faltschachtel mit einer Ausgießöffnung in einem Seitenteil (5) einer beim Falten zunächst entstehenden Hülse und einer an einem Seitenteil (3, 10, 12) ohne Ausgießöffnung (6) angelenkten Sicherungslasche (29), die beim Verschließen der Schachtel in den die Ausgießöffnung (6) aufweisenden Bereich des Seitenteils (5) zu liegen kommt, wobei die Ausgießöffnung (6) mit einem Wiederverschluß versehen ist, und die Sicherungslasche (29) mindestens teilweise über dem Wiederverschluß liegt,
dadurch gekennzeichnet, daß die Sicherungslasche (29) am Karton des Seitenteiles (5) nur in der Umgebung der Ausgießöffnung (6) aufgeklebt ist und daß außerhalb des Klebebereiches in die Sicherungslasche (29) eine Aussparung (33) ausgestanzt ist.

2. Faltschachtel nach Anspruch 1, dadurch gekennzeichnet, daß die Sicherungslasche (29) eine an ihrem seitlichen Rand überstehende Handhabe aufweist.

3. Faltschachtel nach einem der vorhergehenden Ansprüche, dadurch gekennzeichnet, daß die Ausgießöffnung (6) in an sich bekannter Weise eine Blechverstärkung (7) aufweist.

4. Faltschachtel nach einem der vorhergehenden Ansprüche, dadurch gekennzeichnet, daß die Sicherungslasche (29) über eine Deckellasche (19) an einem Seitenteil (3) angelenkt ist, das demjenigen Seitenteil (5) benachbart ist, in dem die Ausgießöffnung (6) vorgesehen ist.

5. Faltschachtel nach einem der Ansprüche 1 bis 3, dadurch gekennzeichnet, daß die Sicherungslasche (29) über eine Deckellasche (20) an dem Seitenteil (10) angelenkt ist, das bei aufgerichteter Schachtel dem Seitenteil (3) gegenüberliegt, und demjenigen Seitenteil (5) benachbart ist, in dem die Ausgießöffnung (6) vorgesehen ist.

6. Faltschachtel nach einem der vorhergehenden Ansprüche, dadurch gekennzeichnet, daß die Sicherungslasche (29) eine sich verjüngende Form aufweist und ihr freies Ende einen Abstand von dem seitlichen Rand (Schnittlinie 26) der Deckellasche aufweist.

7. Faltschachtel nach einem der vorhergehenden Ansprüche, dadurch gekennzeichnet, daß dieser Abstand etwa ein Drittel der Breite des die Ausgießöffnung (6) aufweisenden Seitenteiles (5) beträgt.

8. Faltschachtel nach einem der vorhergehenden Ansprüche, dadurch gekennzeichnet, daß der Abstand der Ausgießöffnung (6) von dem Deckel der gefalteten Schachtel kleiner ist als die Länge der Sicherungslasche (29), oder höchstens so groß ist, daß die Sicherungslasche (29) die Ausgießöffnung (6) noch teilweise übergreift.

9. Faltschachtel nach einem der vorhergehenden Ansprüche, dadurch gekennzeichnet, daß der am Seitenteil (5) angeklebte Teil der Sicherungslasche (29) mit dem nicht angeklebten Teil über eine Perforation verbunden ist.

## Claims

1. Fold-up box with a pouring opening in a side portion (5) of a shell initially produced by folding and with a safety tab (29) which is hinged to a side portion (3, 10, 12) without a pouring opening, the safety tab coming to rest, when the box is closed, in that region of the side portion (5) which exhibits the pouring opening (6), whereby the pouring opening (6) is provided with a reseal and the safety tab (29) lies at least partially over the reseal, characterized in that the safety tab (29) is glued to the cardboard of the side portion (5) only in the vicinity of the pouring opening (6) and that, outside of the gluing region, an opening (33) is stamped out in the safety tab (29).

2. Fold-up box according to claim 1, characterized in that the safety tab (29) exhibits a grip which projects out beyond its side edge.

3. Fold-up box according to one of the preceeding claims, characterized in that the pouring opening (6) exhibits, in a manner known per se, a sheet metal reinforcement (7).

4. Fold-up box according to one of the preceeding claims, characterized in that the safety tab (29) is hinged to a side portion (3) via a lid tab (19), the side portion (3) bordering on that side portion (5) which is provided with the pouring opening (6).

5. Fold-up box according to one of the claims 1 through 3, characterized in that the safety tab (29) is hinged to the side portion (10) via a lid tab (20) the side portion (10) lying, when the box is assembled, across from the side portion (3) and being adjacent to that side portion (5) which is provided with the pouring opening (6).

6. Fold-up box according to one of the preceeding claims, characterized in that the safety tab (29) exhibits a tapered shape and its free end exhibits a separation from the side edge (cut line 26) of the lid tab.

7. Fold-up box according to one of the preceeding claims, characterized in that this separation assumes a value of approximately one third of the width of that side portion (5) which exhibits the pouring opening (6).

8. Fold-up box according to one of the preceeding claims, characterized in that the separation of the pouring opening (6) from the lid of the folded box is smaller than the length of the safety tab (29) or is at least sufficiently large that the safety tab (29) still partially overlaps the pouring opening (6).

9. Fold-up box according to one of the preceeding claims, characterized in that that part of the safety tab (29) which is glued to the side portion (5) is connected to the non-glued part by means of a perforation.

## Revendications

1. Boîte pliante avec une ouverture verseur située dans une partie latérale (5) d'un manchon formé d'abord en pliant et une éclisse de sécurité (29) articulée à une partie latérale (3, 10, 12) sans ouverture verseur (6), qui lors d'une fermeture de la boîte sera placée dans la zone de la partie latérale (5) présentant l'ouverture verseur (6), l'ouverture verseur (6) ayant une fermeture à utilisation multiple et la fermeture à utilisation multiple étant recouvert au moins partiellement par l'éclisse de sécurité (29)
characterisée en ce que
l'éclisse de sécurité (29) n'est collée au carton de la partie latérale (5) qu'aux environs de l'ouverture verseur (6) et qu'en dehors de la zone adhésive un évidement (33) est découpé dans l'éclisse de sécurité (29).

2. Boîte pliante selon la revendication 1 characterisée en ce que l'éclisse de sécurité (29) présente une manette dépassant son bord latéral.

3. Boîte pliante selon une des revendications précédentes characterisée en ce que l'ouverture verseur (6) présente un renforcement en tôles (7) d'une manière connue en soi.

4. Boîte pliante selon une des revendications précédentes characterisée en ce que l'éclisse de sécurité (29) est articulée au moyen d'une éclisse de couvercle (19) à une partie latérale (3) voisine à cette partie latérale (5) dans laquelle l'ouverture verseur (6) est prévue.

5. Boîte pliante selon une des revendications 1 à 3 characterisée en ce que l'éclisse de sécurité (29) est articulée au moyen d'une éclisse de couvercle (20) à une partie latérale (10) qui en cas de boîte dressée est en face de la partie latérale (3) et voisine à cette partie latérale (5) dans laquelle l'ouverture verseur (6) est prévue.

6. Boîte pliante selon une des revendications précédentes characterisée en ce que l'éclisse de sécurité (29) présente une forme effilée et son extrémité libre présente une distance du bord latéral (ligne transverse 26) de l'éclisse de couvercle.

7. Boîte pliante selon une des revendications précédentes characterisée en ce que cette distance s'élève à un tiers à peu près de la largeur de la partie latérale (5) présentant l'ouverture verseur (6).

8. Boîte pliante selon une des revendications précédentes characterisée en ce que la distance entre l'ouverture verseur (6) et le couvercle de la boîte pliée est inférieure à la longueur de l'éclisse de sécurité (29) ou au maximum si grande que l'éclisse de sécurité (29) recouvre encore partiellement l'ouverture verseur (6).

9. Boîte pliante selon une des revendications précédentes characterisée en ce que la partie de l'éclisse de sécurité (29) collée à la partie latérale (5) est reliée à la partie non collée au moyen d'une perforation.
